# EUROPÄISCHE PATENTSCHRIFT

(11) **EP 1 869 982 B1**
(45) Veröffentlichungstag und Bekanntmachung des Hinweises auf die Patenterteilung: **10.07.2019**
(21) Anmeldenummer: 07108714.2
(22) Anmeldetag: 23.05.2007
(51) Int. Cl.: A23C 9/00, B01J 2/30, B01J 2/00, B01J 2/04

(54) **Verfahren und Vorrichtung zur Herstellung eines pulverförmigen, fettreichen Stoffes**
Method and device for manufacturing a fat-rich substance in powder form
Procédé et dispositif de fabrication d'une matière en forme de poudre et riche en graisses

(30) Priorität: 03.06.2006 DE 102006026062
(43) Veröffentlichungstag der Anmeldung: 26.12.2007
(73) Patentinhaber: Messer Group GmbH, 65812 Bad Soden (DE)
(72) Erfinder: Berger, Thomas, 45257 Essen (DE); Kuijs, Jan, 1722 CC Zuid-Scharwoude (NL)

(56) Entgegenhaltungen:
- WO-A-2005/079969
- DE-A1- 1 767 046
- DE-A1- 19 750 679
- GB-A- 1 084 385

## Beschreibung

Die Erfindung betrifft ein Verfahren und eine Vorrichtung zur Herstellung eines pulverförmigen, fettreichen Stoffes.

Derartige Stoffe kommen als Vor- oder Endprodukt von Lebensmitteln für Mensch und Tier sowie als pharmazeutisches Produkt zum Einsatz. Als Futtermittel für die Kälbermast werden beispielsweise so genannte Milchersatzprodukte verwendet. Dies sind Mischungen aus Fetten und weiteren, meist festen Zusatzstoffen, die in Pulverform hergestellt und vor dem Gebrauch mit Wasser zu einer milchartigen Flüssigkeit angerührt werden. Da immer höhere Nährstoffgehalte gewünscht werden, wird angestrebt, den Fettanteil dieser Milchersatzprodukte zu erhöhen.

Ein hoher Fettanteil erschwert aber insbesondere die Herstellung und Verarbeitbarkeit des Pulvers, da dieses mit zunehmendem Fettanteil zur Agglomeration neigt.

In einem bekannten Verfahren zur Herstellung von Milchersatzprodukten, wie es beispielsweise in der DE 17 67 046 A1 beschrieben wird, werden feste Partikel, bestehend insbesondere aus Molkepulver, Mineralien, Vitamine und/oder sonstige für den Stoffwechsel der Tiere förderliche Stoffe in einem Mischer oder einem Sprühturm vorgelegt. Anschließend wird eine fettreiche Komponente aufgesprüht und untergemischt. Dabei werden die festen Partikel vom Fett ummantelt. Die Mischung wird danach in einem weiteren Prozessschritt abgekühlt und dabei das Fett kristallisiert. Auf diese Weise erhält man ein rieselfähiges, stabiles Pulver, das vor seinem Einsatz als Futtermittel mit Wasser zu vermischen ist. Nachteilig bei diesem Verfahren ist zum einen, dass der Fettanteil auf maximal etwa 50 Gew. % begrenzt ist, da bei höheren Fettanteilen das Gemisch den Mischer nicht mehr in Pulverform verlässt. Zum anderen befindet sich das Fett bei Anwendung dieses Verfahrens an der Oberfläche der Feststoffe. Durch Lagerung und Transport insbesondere bei höheren Temperaturen neigen solche Produkte zum Agglomerieren und können nicht mehr verwendet werden.

Aus der DE 102 43 483 A1 ist eine Vorrichtung zur Herstellung von Pellets, Mikropellets oder Pulvern aus einem flüssigen oder pelletierbaren Stoff in einem kalten Gas bekannt. Sie umfasst eine Einrichtung zur Zuführung des flüssigen oder pelletierbaren Stoffes in einen Bereich, in dem sich eine Kühlstrecke mit kaltem Gas befindet, eine Einrichtung zur Erzeugung eines kalten Gases oder eines kalten Gasstromes und eine Sammeleinrichtung für das Produkt. Das mit dieser Vorrichtung hergestellte Produkt muss allerdings bei der anschließenden Lagerung sorgfältig dauerhaft gekühlt werden, um eine Wiederverflüssigung des Produkts zu vermeiden. Auch besteht die Gefahr, dass es bei großen Lagerhöhen, etwa beim Übereinanderstapeln mehrerer mit dem Produkt gefüllter Säcke, zur Agglomeration der Pulverteilchen kommen kann.

Aus der DE 197 50 679 A1 ist ein Verfahren zum Erzeugen von wasserhaltigen, gefrorenen bzw. erstarrten, lagerstabilen, rieselfähigen Pulvermikrokapseln bekannt. Bei diesem Verfahren werden wasserhaltige Emulsions- bzw. Suspensionssysteme durch Feinstversprühen oder Feinstdüsen in einen gekühlten Raum gebracht, in dem die Teilchen bei hohem zeitlichem Temperaturgradienten abgekühlt werden. Durch die plötzliche Abkühlung erstarren zumindest die Oberflächen der Teilchen und verhindern so eine Diffusion der im Innern der Tropfen vorhandenen Substanzen. Es entstehen strukturstabile Kapselsysteme, die in Kühlsystemen dauerhaft gelagert werden können. Nachteilig bei den so erzeugten Pulvern ist jedoch, dass die Struktur der Mikrokapseln bei Erwärmen zerstört wird. Insbesondere werden Teilchen des W/O - Typs, also mit einer fettigen äußeren Hülle, miteinander verklumpen wodurch die Rieselfähigkeit wesentlich beeinträchtigt wird. Zudem kann das Verfahren bei im Wesentlichen wasserfreien Systemen nicht eingesetzt werden.

Ein weiteres Verfahren ist aus der DE 129 43 52 B bekannt, bei dem eine flüssige Verbindung auf die Oberfläche von in einem Behandlungsturm herabfallenden Teilchen gesprüht wird, wobei die Flüssigkeit durch Verteilerrohre, welche in seitlichen Öffnungen in der Wand des Behandlungsturm angeordnet sind, eingeführt wird.

Der Erfindung liegt die Aufgabe zugrunde, einen pulverförmigen, fettreichen Stoff, insbesondere ein Milchersatzprodukt, zu schaffen, bei dem ein hoher Fettanteil mit einer dauerhaften Beständigkeit seiner Pulverförmigkeit und Rieselfähigkeit verbunden ist.

Diese Aufgabe wird durch ein Verfahren mit den Mermalen des Anspruchs 1 gelöst.

Die Partikel des auf diese Weise erzeugten pulverförmigen Stoffs weist einen fettreichen Kern auf, der von einer Hülle aus Partikeln eines festen, pulverförmigen Trägermaterials umgeben ist. Diese umhüllende fettarme Schicht schirmt den fettreichen Kern weitestgehend ab und verhindert zuverlässig das Verkleben der Teilchen miteinander. Das Trägermaterial ist dabei vorzugsweise so gewählt, dass es während der Lagerung oder des Transports des Stoffes bei üblichen Temperaturen auch in ungekühlten Räumen oder bei direkter Sonneneinstrahlung im festen, nicht klebendem Zustand verbleibt. Auch die Agglomeration durch Verpressung bei hohen Lagerhöhen wird gegenüber den bekannten Systemen deutlich reduziert und die Rieselfähigkeit bleibt nahezu uneingeschränkt erhalten. Das Verfahren ist insbesondere auch bei wasserarmen Systemen einsetzbar. Die mit dem Verfahren hergestellten Stoffe finden beispielsweise Anwendung im Bereich der Ernährung von Tier und Mensch und im Bereich der Pharmazie oder chemischen Industrie.

Erfindungsgemäss erfolgt die Ummantelung dabei überwiegend in einer mechanischen Mischeinrichtung, in der die fettreichen Teilchen und die Teilchen des Trägermediums in innigen Kontakt gebracht werden. Die Ummantelung weist dadurch eine hohe mechanische Stabilität und die Teilchen werden sehr homogen.

In einer vorteilhaften Weiterbildung des erfindungsgemäßen Verfahrens wird das fettreiche Medium innerhalb eines Sprühturms pneumatisch in einem Gasstrahl, der auf den Gasstrahl des Trägermaterials zumindest teilweise entgegen gerichtet ist, ausgetragen.

Bei dem zur Erzeugung des Gasstroms eingesetzten Gas handelt es sich bevorzugt um ein inertes Gas, beispielsweise um Stickstoff. Um dieses besonders effizient einsetzen zu können, sieht eine bevorzugte Ausgestaltung der Erfindung vor, dass das im Sprühturm eingesetzte Gas in einem Kreislauf geführt wird.

Zweckmäßigerweise werden die erzeugten Mikropartikel in einer Mischeinrichtung mit den noch freien Partikeln des Trägermaterials durchmischt, um einen besonders dichten und stabilen Mantel von Pulverteilchen des Trägermaterials um den fettreichen Kern herzustellen.

Bevorzugt handelt es sich bei dem erzeugten Stoff um ein Futtermittel oder Lebensmittelprodukt mit einem Fettanteil von wenigstens 50 Gew.-%, besonders bevorzugt über 60 Gew.-% auf. Bei derartig hohen Fettgehalten neigen Pulver, die nach dem Stand der Technik hergestellt werden, zum Verklumpen. Demgegenüber bleibt bei den erfindungsgemäß hergestellten Pulvern die Rieselfähigkeit auch bei hohen Fettgehalten nahezu uneingeschränkt erhalten.

Vorteilhafterweise enthält das Trägermaterial Molkepulver. Neben Molkepulver können noch weitere, physiologisch und/oder pharmakologisch vorteilhafte Substanzen vorgesehen sein, die entweder selbst als Feststoff vorliegen oder mit anderen Feststoffen verbunden sind.

Die Aufgabe der Erfindung wird auch mit einer Vorrichtung zur Herstellung eines pulverförmigen Stoffes nach Anspruch 7 gelöst. Die erfindungsgemäße Vorrichtung umfasst einen Sprühturm, eine im oberen Bereich des Sprühturms angeordnete Einrichtung zur Zuführung eines flüssigen Mediums in einen Bereich des Sprühturms, in dem sich eine Kühlstrecke befindet, eine Einrichtung zur Zuführung eines gasförmigen, primären Kältemittels und eine Sammeleinrichtung für das Produkt und ist gekennzeichnet durch eine Mischeinrichtung zum Beimischen eines pulverförmigen Trägermaterials in das primäre Kältemittel. In der Vorrichtung wird also einem kalten Strom eines gerade noch flüssigen Mediums ein Strom kalter, fester Partikel des Trägermaterials entgegengesetzt. Beim Auftreffen der Partikel des Trägermaterials auf die Tröpfchen des Mediums gefriert die Oberfläche des Tröpfchens an der Kontaktstelle, wobei teilweise die Partikel des Trägermaterials an den Tröpfchen festfrieren.

Bevorzugt weist die Vorrichtung einen am oberen Ende des Sprühturmes angeordnete Einrichtung zur Zuführung eines sekundären Kältemittels auf. Das sekundäre Kältemittel dient dazu, die Kühlung des flüssigen Stoffes innerhalb der Kühlstrecke zu verbessern. Als sekundäres Kältemittel kann beispielsweise ein kaltes Gas zum Einsatz kommen, das gasförmig oder verflüssigt in den Sprühturm eingedüst wird, sich im Bereich der Kühlstrecke jedoch stets im gasförmigen Zustand befindet. Vorzugsweise handelt es sich bei dem sekundären Kältemittel um die gleiche Substanz wie beim primären Kältemittel, beispielsweise um Stickstoff.

Die Einrichtung zur Zuführung des primären Kältemittels ist im unteren Bereich des Sprühturms angeordnet.

Die erfindungsgemässe Vorrichtung umfasst eine Mischeinrichtung, die innerhalb des Sprühturms angeordnet ist und insbesondere für die Durchmischung der erzeugten Mikropellets mit Partikeln des Trägermaterials sorgt, die noch nicht an den Tröpfchen des Mediums haften. Dadurch wird der Mantel des fettarmen Trägermaterials um den fettreichen Kern verdichtet.

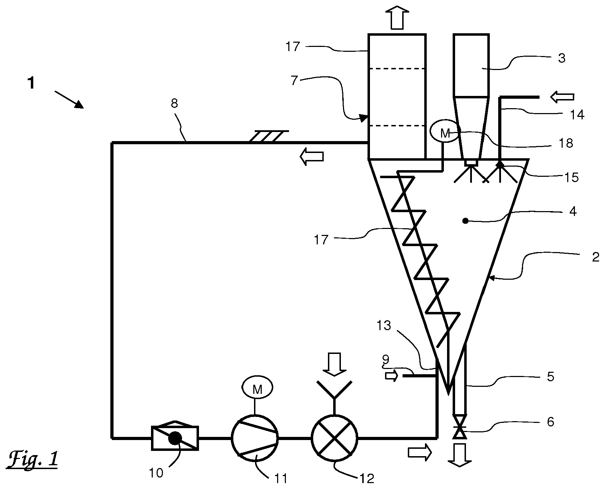

Nachfolgend soll ein Ausführungsbeispiel der Erfindung näher erläutert werden. Die einzige Zeichnung (Fig. 1) zeigt schematisch eine erfindungsgemäße Vorrichtung zur Erzeugung eines pulverförmigen, fettreichen Stoffes.

Die in der Zeichnung gezeigte Vorrichtung 1 zur Herstellung einer pulverförmigen, fettreichen Substanz, beispielsweise eines Futtermittels umfasst einen Sprühturm 2 in Form eines nach unten hin sich verengenden Konus oder Kegelstumpfes. Im oberen Bereich ist ein Zugabebehälter 3 für den zu pulverisierenden Stoff, im unteren Bereich ein Abscheider 5 für das Endprodukt angeordnet, der über ein Ventil 6 an einen hier nicht gezeigten Auffangbehälter anschließbar ist.

Im oberen Bereich des Sprühturms 2 befindet sich eine Abluftvorrichtung 7, in der das im Prozess zuvor eingesetzte Gas aufgefangen wird. Von der Ablufteinrichtung 7 zweigt eine thermisch isolierte Kreisgasleitung 8 ab, in der nacheinander eine Drosselklappe 10, eine Fördereinrichtung 11 und eine Mischeinrichtung 12 angeordnet sind. Die Kreisgasleitung 8 endet an einer Gaszuführung 13 im unteren Bereich des Sprühturms 2, an der auch eine Zuführung 9 für frisches Kältemittel im gasförmigen oder flüssigen Zustand vorgesehen ist. Im oberen Bereich des Sprühturms 2 mündet eine Zuführleitung 14 für ein sekundäres Kältemittel ein, die innerhalb des Sprühturms 2 an einer Düse 15 ausmündet. Innerhalb des Sprühturms ist eine Mischschnecke 17 angeordnet, die vermittels eines Motors 18 angetrieben wird.

Beim Einsatz der Vorrichtung 1 wird ein fettreiches Medium, das im Zugabebehälter in flüssiger Form vorliegt, mittels einer am Zugabebehälter 3 angeordneten Dosiereinrichtung, z.B. einer Mikrotropfvorrichtung in Form einzelner Tropfen - vorzugsweise mit Durchmesser von 1 bis 600 Mikrometer - in das kalte Gas der Kühlstrecke 4 des Sprühturms 2 eingebracht. Beim dem fettreichen Medium handelt es sich beispielsweise um eine Substanz, die für den Einsatz als Futtermittel für die Kälbermast bestimmt ist. Das fettreiche Medium ist vorzugsweise so gewählt oder vorbehandelt, dass sein Gefrierpunkt oberhalb üblicher oder maximal anzunehmender Transport- und Lagertemperaturen liegt, also beispielsweise oberhalb von 30°C. Um das Medium im flüssigen Zustand in den Sprühturm 2 einbringen zu können, wird es daher in vielen Fällen vor der Zuführung an den Zugabebehälter 3 mit Hilfe einer hier nicht gezeigten Heizeinrichtung auf eine Temperatur deutlich oberhalb seiner Erstarrungstemperatur beheizt werden. Das fettreiche Medium gelangt anschließend in einen oberen, als Kühlstrecke 4 fungierenden Bereich des Sprühturms 2 und wird unter der Wirkung der dort vorherrschenden kalten Atmosphäre bis auf eine Temperatur im Bereich seiner Kondensationstemperatur abgekühlt.

Die kalte Atmosphäre innerhalb der Kühlstrecke 4 wird mit Hilfe eines primären Kältemittels hergestellt, das über die Gaszuführung 13 in den Sprühturm 2 eingeführt wird. Das primäre Kältemittel, bei dem es sich um ein inertes Gas, wie beispielsweise kalter gasförmiger Stickstoff oder ein anderes kryogenes Kältemittel handelt, wird in einem innerhalb des Sprühturms 2 durch die Kühlstrecke 4 hindurch nach oben gerichteten Gasstrom geführt und an der Abluftvorrichtung 7 aufgefangen. Für den Fall, das das Kühlgas in der Kühlstrecke 4 nicht ausreicht, um das fettreiche Medium auf die gewünschte Temperatur abzukühlen, kann optional über die Zuführeinrichtung 14 ein sekundäres Kältemittel, beispielsweise flüssiger -und sogleich nach seiner Zuführung in den Sprühturm 2 verdampfender- Stickstoff, kalter gasförmiger Stickstoff oder ein anderes kryogenes Kältemittel eingedüst werden. In diesem Falle wird das fettreiche Medium in einem gleichgerichteten Kaltgasstrom durch die Kühlstrecke 4 geführt.

Der überwiegende Teil des aufgefangenen primären Kältemittels gelangt in die Kreisgasleitung 8 und wird mittels der Fördereinrichtung 12 zur Gaszuführung 13 zurückgetrieben. Um die Temperatur innerhalb der Kühlstrecke 4 auf einen gewünschten Wert von z.B. -10 °C zu halten, wird dem primären Kältemittel über die Zuführung 9 laufend frisches, kaltes Kältemittel im gasförmigen oder verflüssigten Zustand zugemischt. Handelt es sich beispielsweise bei dem Kältemittel um Stickstoff, wird dem in der Kreisgasleitung 8 geführten gasförmigen Stickstoff kälteverflüssigter Stickstoff zugeführt. Über einen hier nicht gezeigten Temperaturfühler wird die Gasstrommenge an einer geeigneten Armatur, z.B. ein steuerbares Magnetventil an der Zuführung 9 angesteuert, um die Kühltemperatur zu regulieren. Um einen Überdruck in der Vorrichtung 1 zu vermeiden, wird das überschüssige Gas an der Ablufteinrichtung 7 abgeführt und über eine Filtereinrichtung 19 in die Außenatmosphäre abgegeben oder einer weiteren Verwendung oder der Wiederaufbereitung zugeführt.

An der Mischeinrichtung 12 wird ein pulverförmiges, fettarmes Trägermaterial in die Kreisgasleitung 8 eingespeist. Bei dem Trägermaterial kann es sich beispielsweise um Molkepulver und/oder einen anderen pulverförmigen, physiologisch vorteilhaften Stoff handeln. Der Fettgehalt des Trägermaterials ist so bemessen, dass seine Rieselfähigkeit unter normalen Bedingungen stets gewährleistet ist. Das Trägermaterial, das durch den thermischen Kontakt mit dem primären Kältemittel in der Mischeinrichtung 12 auf eine Temperatur abgekühlt wird, die deutlich unter der Erstarrungstemperatur des fettreichen Mediums liegt, wird vom Gasstrom mitgerissen und trifft im Bereich der Kühlstrecke 4 des Sprühturms 2 auf die noch flüssigen Tropfen des fettreichen Mediums auf. Bereits beim Kontakt mit einem Partikel des kalten Trägermaterials gefriert die Oberfläche des Tropfens des fettreichen Mediums unmittelbar um die Kontaktstelle herum, und der Partikel des Trägermaterials bleibt am Tropfen haften. Durch die Verwirbelungen der aufeinander treffenden Gas- und Stoffströme kommt es während der Aufenthaltsdauer eines Tropfens des fettreichen Mediums in der Kühlstrecke 4 zu einer Vielzahl derartiger Kontakte. Zugleich beginnt die Oberfläche der Partikel des fettreichen Mediums aufgrund des Kontakts mit der kalten Atmosphäre auch in den übrigen Bereichen zu gefrieren. Schließlich bilden die Partikel des Trägermaterials und des fettreichen Mediums eine Schüttung im unteren Teil des Sprühturms 2. Durch die an den Partikeln des fettreichen Mediums bereits anhaftenden Partikeln des Trägermediums wird eine Agglomeration der Partikel des fettreichen Mediums wirksam unterbunden; zugleich jedoch weisen die in der Schüttung anwesenden Teilchen des fettreichen Mediums immer noch eine hohe Neigung auf, mit den Partikeln des Trägermediums eine gut haftende Verbindung einzugehen. Die in der Schüttung vorliegenden Teilchen werden von der Mischschnecke 17 durchmischt und in innigen Kontakt gebracht. Auf diese Weise werden die Teilchen mit einer stabilen Mantelschicht aus Trägermaterial versehen und weisen insgesamt eine große Homogenität auf. Anschließend gelangen sie in den Abscheider 5, aus dem sie bevorzugt chargenweise entnommen werden.

In einer alternativen Bauform kann die Gaszuführung 13, und damit die Einmündung der Kreisgasleitung 8 in den Sprühturm 2, auch auf Höhe der Kühlstrecke 4 vorgesehen sein. Diese Alternative ermöglicht das Einsprühen des Trägermaterials unmittelbar in die Kühlstrecke, wodurch eine besonders innige Durchmischung des fettreichen Mediums mit dem Trägermedium bereits in der Atmosphäre bewirkt wird. Es ist auch denkbar, die Einmündung der Kreisgasleitung 8 und die Gaszuführung räumlich voneinander zu trennen.

Das erfindungsgemäß hergestellte Endprodukt besteht aus sehr homogenen Pulverteilchen mit einem fettreichen Kern, der durchaus noch flüssige oder pastöse Eigenschaften haben kann, der jedoch von einem dichten, stabilen Mantel von Partikeln des Trägermaterials umgeben ist. Diese stabile, nicht zur Agglomeration neigende Mantelschicht verhindert zuverlässig die Agglomeration der Pulverteilchen, auch bei einem Fettanteil der Pulverteilchen von mehr als 50 Gew.-% und Lagertemperaturen von über 50°C. Um die Rieselfähigkeit des Futtermittels dauerhaft und zuverlässig aufrecht zu erhalten, genügt im Prinzip bereits eine einfache, jedoch zumindest weitgehend geschlossene Schicht an Mantelteilchen. Im Falle von Molketeilchen als Trägermedium beträgt somit die Dicke des Mantels ca. 15-30 Mikrometer.

Das primäre oder sekundäre Kältemittel kann vorteilhaft auch mit einer tangentialen Richtungskomponente zur Kreisgasführung in den Sprühturm 2 eingesprüht werden, damit durch die zielgerichtete Einspeisung Verwirbelungen in dem Kühlturm entstehen. Durch die entstehenden Verwirbelungen bzw. Turbulenzen kann die gravimetrische Verweilzeit bzw. Fallzeit der Tröpfchen in der Kühlstrecke 4 verlängert werden. Die Kühlstrecke 4 hat im Allgemeinen eine Länge im Bereich von 1 bis 10 m, vorzugsweise, 2 bis 8 m, besonders bevorzugt 2 bis 6 m, insbesondere 2 bis 4 m. Die Vorrichtung 1 umfasst weiterhin vorzugsweise eine hier ebenfalls nicht gezeigte Steuereinheit, insbesondere für die Temperatur-Steuerung oder Temperatur-Regelung des/der Kältemittel. Über ein steuerbares Ventil kann beispielsweise die zugeführte Menge des primären oder sekundären Kältemittels geregelt und gesteuert werden. Die Steuereinheit kann vorteilhaft zur Steuerung der Geschwindigkeit des kalten Gasstromes (z.B. Ventilator-Steuerung) eingesetzt werden. Die mit der erfindungsgemäßen Vorrichtung erzeugten Mikropellets haben z.B. einen Durchmesser von 1 bis 750 Mikrometer (µm), vorzugsweise 1 bis 600 µm, insbesondere 200 bis 600 µm, mit einem Kerndurchmesser von 100-500 Mikrometern, bei einer Dicke der aus Trägermedium bestehenden Mantelschicht von 15-30 µm. Pulverteilchen haben eine ähnliche Größe. Bei dem nach dem erfindungsgemäßen Verfahren hergestellten pulverförmigen, fetthaltigen Endprodukt handelt es sich insbesondere um das Vor- oder Endprodukt eines pharmazeutischen Präparats, eines Lebensmittels oder eines Futtermittels.

### Beispiel:

Aus einer auf 80°C aufgeheizten fettreichen Schmelze werden Tröpfchen mit einem Teilchendurchmesser von 10 bis 200 µm gebildet. Die Tröpfchen fallen durch eine 4 m hohe Kühlstrecke und werden bei einer Kühltemperatur von - 30°C bis nahe auf ihre Kristallisationstemperatur von 45 °C abgekühlt. Von unten wird in einem Gasstrom aus kaltem Stickstoffgas Molkepulver in den Sprühturm eingesprüht. Die Molketeilchen haften teilweise an den noch flüssigen Fettkugeln fest; aufgrund des thermischen Kontakts gefrieren diese an ihrer Oberfläche und bilden mit den daran haftenden Molketeilchen zumindest annähernd stabile Pulverteilchen aus. Diese Pulverteilchen werden mit den noch verbliebenen Molketeilchen in der Mischeinrichtung 17 vermischt, wodurch sich die Molkeschicht auf den Pulverteilchen weiter verdichtet und homogenisiert. Das pulverförmige Endprodukt gelangt mit einer Temperatur von ca. 10° C zum Abscheider 5. Das pulverförmige Endprodukt besitzt einen Fettanteil von 50 Gew.-%, und ist auch bei einer Erwärmung auf Lagertemperaturen von 30 °C und/oder bei einer Lagerung in hohen Schichtungen stabil und rieselfähig.

### Bezugszeichenliste

- 1.: Vorrichtung
- 2.: Sprühturm
- 3.: Zugabebehälter
- 4.: Kühlstrecke
- 5.: Abscheider
- 6.: Ventil
- 7.: Abluftvorrichtung
- 8.: Kreisgasleitung
- 9.: Zuführung
- 10.: Kühleinrichtung
- 11.: Fördereinrichtung
- 12.: Mischeinrichtung
- 13.: Gaszuführung
- 14.: Zuführeinrichtung für sekundäres Kältemittel
- 15.: Düse
- 16.: -
- 17.: Mischschnecke
- 18.: Motor
- 19.: Filtereinrichtung

## Patentansprüche

1. Verfahren zur Herstellung eines pulverförmigen fettreichen Stoffes, bei dem
- ein fettreiches Medium im flüssigen Zustand in einer kalten Atmosphäre zu Tropfen versprüht und auf eine Temperatur knapp über seiner Erstarrungstemperatur abgekühlt wird,
- ein auf eine Temperatur unterhalb der Erstarrungstemperatur des fettreichen Mediums abgekühltes, pulverförmiges, fettarmes Trägermedium mit den Tropfen des fettreichen Mediums in Kontakt gebracht wird, wobei
- durch den thermischen Kontakt mit Partikeln des Trägermediums und/oder der kalten Atmosphäre die Tropfen des fettreichen Mediums zumindest an ihrer Oberfläche erstarren und Partikel des Trägermediums an der Oberfläche der Tropfen haften bleiben,
- das Trägermaterial in einem auf die Tropfen des fettreichen Mediums gerichteten, aus einem primären Kältemittel bestehenden Gasstrahl ausgetragen wird und
- die Partikel des Trägermediums mit den zumindest teilweise erstarrten Tropfen des fettreichen Mediums in einer mechanischen Mischeinrichtung (17) innig durchmischt werden.

2. Verfahren nach Anspruch 1, **dadurch gekennzeichnet, dass** das fettreiche Medium innerhalb eines Sprühturms (2) pneumatisch in einem Gasstrahl, der auf den das Trägermaterial enthaltende Gasstrahl gerichtet ist, ausgetragen wird.

3. Verfahren nach einem der vorhergehenden Ansprüche, **dadurch gekennzeichnet, dass** das im Sprühturm (2) eingesetzte Gas in einem Kreislauf geführt wird.

4. Verfahren nach einem der vorhergehenden Ansprüche, **dadurch gekennzeichnet, dass** die Partikel des fettreichen Mediums und noch nicht an Partikeln des fettreichen Mediums haftende Partikel des Trägermediums mittels einer Mischeinrichtung (17) durchmischt werden.

5. Verfahren nach einem der vorhergehenden Ansprüche, **dadurch gekennzeichnet, dass** das Trägermaterial Molkepulver enthält.

6. Verfahren nach einem der vorhergehenden Ansprüche, **dadurch gekennzeichnet, dass** der Fettanteil des erzeugten pulverförmigen Stoffes über 50 Gew.-%, bevorzugt über 60 Gew.-% beträgt.

7. Vorrichtung zur Herstellung eines pulverförmigen fetthaltigen Stoffes, umfassend einen Sprühturm (2), eine im oberen Bereich des Sprühturms (2) angeordnete Einrichtung (3) zur Zuführung eines flüssigen Mediums in einen Bereich des Sprühturms (2), in dem sich eine Kühlstrecke (4) befindet, eine im unteren Bereich des Sprühturms (2) angeordnete Einrichtung (13) zur Zuführung eines Stroms aus einem gasförmigen, primären Kältemittel und eine Sammeleinrichtung (5) für das Produkt,
und einer ersten Mischeinrichtung (12) zum Beimischen eines pulverförmigen Trägermaterials in das primäre Kältemittel,
**dadurch gekennzeichnet,**
**dass** eine zweite, mechanische Mischeinrichtung (17) vorgesehen ist, in der die fettreichen Teilchen und die Teilchen des Trägermediums in innigen Kontakt gebracht werden.

8. Vorrichtung nach Anspruch 7, **dadurch gekennzeichnet, daß** die Vorrichtung einen am oberen Ende des Sprühturmes (2) angeordnete Einrichtung (14) zur Zuführung von sekundärem Kältemittel aufweist.

9. Vorrichtung nach Anspruch 7 oder 8, **dadurch gekennzeichnet, dass** zumindest eine Einrichtung (13) zur Zuführung des primären Kältemittels in den Sprühturm (2) im Bereich des Kühlstrecke (4) ausmündet.

## Claims

1. Method for manufacturing a fat-rich substance in powder form, in which
- a fat-rich medium in the liquid state is atomized to droplets in a cold atmosphere and is cooled to a temperature just above its solidification temperature,
- a fat-poor carrier medium in powder form, cooled to a temperature below the solidification temperature of the fat-rich medium, is brought into contact with the droplets of the fat-rich medium,
wherein
- owing to the thermal contact with particles of the carrier medium and/or the cold atmosphere, the droplets of the fat-rich medium solidify at least at their surface, and particles of the carrier medium adhere to the surface of the droplets,
- the carrier material is discharged in a gas jet that consists of a primary coolant and is directed at the droplets of the fat-rich medium, and
- the particles of the carrier medium are intimately mixed with the at least partially solidified droplets of the fat-rich medium, in a mechanical mixing device (17).

2. Method according to Claim 1, **characterized in that**, within a spray tower (2), the fat-rich medium is discharged pneumatically in a gas jet that is directed at the gas jet containing the carrier material.

3. Method according to either of the preceding claims, **characterized in that** the gas used in the spray tower (2) is conveyed in a circuit.

4. Method according to one of the preceding claims, **characterized in that** the particles of the fat-rich medium, and particles of the carrier medium that are not yet stuck to particles of the fat-rich medium, are mixed by means of a mixing device (17).

5. Method according to one of the preceding claims, **characterized in that** the carrier material contains whey powder.

6. Method according to one of the preceding claims, **characterized in that** the fat content of the resulting substance in powder form is above 50% by weight, preferably above 60% by weight.

7. Apparatus for manufacturing a fat-rich substance in powder form, comprising a spray tower (2), a device (3) arranged in the upper region of the spray tower (2) for the purpose of supplying a liquid medium to a region of the spray tower (2) in which there is a cooling path (4), a device (13) arranged in the lower region of the spray tower (2) for the purpose of supplying a flow of a gaseous primary coolant and a collection device (5) for the product,
and a first mixing device (12) for admixing, to the primary coolant, a carrier material in powder form,
**characterized in that**
there is provided a second, mechanical mixing device (17) in which the fat-rich particles and the particles of the carrier medium are brought into intimate contact.

8. Apparatus according to Claim 7, **characterized in that** the apparatus has a device (14) arranged at the upper end of the spray tower (2) for the purpose of supplying secondary coolant.

9. Apparatus according to Claim 7 or 8, **characterized in that** at least one device (13) for the purpose of supplying the primary coolant into the spray tower (2) discharges in the region of the cooling path (4).

## Revendications

1. Procédé de fabrication d'une substance en poudre riche en matières grasses, selon lequel
- un milieu riche en matières grasses à l'état liquide est pulvérisé en gouttes dans une atmosphère froide et refroidi rapidement à une température supérieure à sa température de solidification,
- un milieu support en poudre pauvre en matières grasses, refroidi à une température inférieure à la température de solidification du milieu riche en matières grasses, est mis en contact avec les gouttes du milieu riche en matières grasses,
- en raison du contact thermique avec les particules du milieu support et/ou l'atmosphère froide, les gouttes du milieu riche en matières grasses se solidifiant au moins sur leur surface, et des particules du milieu support restant collées sur la surface des gouttes,
- le matériau support étant déchargé dans un jet de gaz constitué par un agent réfrigérant primaire, dirigé sur les gouttes du milieu riche en matières grasses, et
- les particules du milieu support étant mélangées intimement avec les gouttes au moins partiellement solidifiées du milieu riche en matières grasses dans un dispositif de mélange mécanique (17).

2. Procédé selon la revendication 1, **caractérisé en ce que** le milieu riche en matières grasses est déchargé pneumatiquement à l'intérieur d'une tour de pulvérisation (2) dans un jet de gaz qui est dirigé vers le jet de gaz contenant le matériau support.

3. Procédé selon l'une quelconque des revendications précédentes, **caractérisé en ce que** le gaz utilisé dans la tour de pulvérisation (2) est mis en circulation dans un circuit.

4. Procédé selon l'une quelconque des revendications précédentes, **caractérisé en ce que** les particules du milieu riche en matières grasses et les particules du milieu support n'adhérant pas encore à des particules du milieu riche en matières grasses sont mélangées au moyen d'un dispositif de mélange (17).

5. Procédé selon l'une quelconque des revendications précédentes, **caractérisé en ce que** le matériau support contient de la poudre de lactosérum.

6. Procédé selon l'une quelconque des revendications précédentes, **caractérisé en ce que** la proportion de matières grasses de la substance en poudre formée est supérieure à 50 % en poids, de préférence supérieure à 60 % en poids.

7. Dispositif pour la fabrication d'une substance en poudre contenant des matières grasses, comprenant une tour de pulvérisation (2), un appareil (3) agencé dans la zone supérieure de la tour de pulvérisation (2), pour l'introduction d'un milieu liquide dans une zone de la tour de pulvérisation (2), dans laquelle se trouve une section de refroidissement (4), un appareil (13) agencé dans la zone inférieure de la tour de pulvérisation (2), pour l'introduction d'un courant d'un agent réfrigérant primaire gazeux, et un dispositif de collecte (5) pour le produit,
et un premier appareil de mélange (12) pour le mélange d'un matériau support en poudre dans l'agent réfrigérant primaire,
**caractérisé en ce qu'**un deuxième appareil de mélange mécanique (17) est prévu, dans lequel les particules riches en matières grasses et les particules du milieu support sont mises en contact intime.

8. Dispositif selon la revendication 7, **caractérisé en ce que** le dispositif comprend un appareil (14) agencé à l'extrémité supérieure de la tour de pulvérisation (2), pour l'introduction d'un agent réfrigérant secondaire.

9. Dispositif selon la revendication 7 ou 8, **caractérisé en ce qu'**au moins un appareil (13) pour l'introduction de l'agent réfrigérant primaire dans la tour de pulvérisation (2) débouche dans la zone de la section de refroidissement (4).
